# EUROPEAN PATENT SPECIFICATION

(11) **EP 1 736 381 B1**
(45) Date of publication and mention of the grant of the patent: **21.05.2008**
(21) Application number: 06251877.4
(22) Date of filing: 03.04.2006
(51) Int. Cl.: B60R 21/34

(54) **Vehicle front bumper arrangement**
Vorderwagenstruktur mit Stossfänger
Dispositif de pare-choc avant pour véhicule

(30) Priority: 22.06.2005 JP 2005181463
(43) Date of publication of application: 27.12.2006
(73) Proprietor: HONDA MOTOR CO., LTD., Tokyo 107-8556 (JP)
(72) Inventor: Kikuchi, Takashi, Wako-shi, Saitama 351-0193 (JP); Ohkura, Kenji, Wako-shi, Saitama 351-0193 (JP); Sasaki, Katsuaki, Wako-shi, Saitama 351-0193 (JP); Morino, Tetsuya, Wako-shi, Saitama 351-0193 (JP)
(74) Representative: Piésold, Alexander James

(56) References cited:
- EP-A- 1 138 556
- EP-A- 1 340 653
- US-B1- 6 179 355
- US-B1- 6 398 275
- PATENT ABSTRACTS OF JAPAN vol. 2003, no. 12, 5 December 2003 (2003-12-05) & JP 2003 285704 A (HONDA MOTOR CO LTD), 7 October 2003 (2003-10-07)

## Description

The present invention relates to a front bumper arrangement for a vehicle, and in particular to a technology for improving the safety of a pedestrian at the time a crash.

Automobiles currently on the market are typically provided with a front bumper that includes a bumper beam covered with a bumper face with a view to improving crash safety and external appearance (see Japanese patent laid open publication No. 2001-58519) at the same time. The bumper beam consists of a steel plate of a stock having a relatively high mechanical strength and stamp formed so as to have a rectangular C-shaped cross section. The bumper beam is firmly attached to vehicle body structural members (such as front side frames) at both ends by using threaded bolts. The bumper face is made by injecting molding plastic material such as polypropylene and polycarbonate resins, and is attached to vehicle body structural members and outer panels (such as front fenders) so as to be spaced from the bumper beam. When the vehicle collides with another vehicle or a fixed structure, the bumper face either deforms or breaks, and a large part of the collision energy is transmitted from the bumper beam to the vehicle body structural members.

When a vehicle fitted with such a front bumper hits a pedestrian at a very low speed, the pedestrian is avoided from receiving any significant impact because the bumper face is able to deform easily. However, when the vehicle hits a pedestrian at a speed exceeding a certain level (at such a speed as to cause the space between the bumper face and bumper beam to be eliminated), as soon as the rear surface of the bumper face hits the front surface of the bumper beam, a large impact energy acts upon the pedestrian. Therefore, the applicant of this application previously proposed a front bumper configured so as to minimize the impact acting upon the pedestrian at the time of a crash. In this proposal, an impact absorption plate (safety plate) consisting of a thin steel plate stamp formed into a letter U and having a relatively low rigidity is mounted centrally on the bumper beam so that the impact energy may be absorbed in a smooth manner at the time of an impact through deformation of the impact absorption plate (see Japanese patent laid open publication No. 2003-285704, on which the precharacterising part of claim 1 is based).

The front bumper disclosed in Japanese patent laid open publication No. 2003-285704 includes a bumper face consisting of a central planar portion extending laterally of the vehicle body, pair of slanted portions each extending from a corresponding lateral end of the central planar portion rearwardly at a certain angle and an impact absorption plate mounted opposite to the central planar portion. This front bumper however does not necessarily ensure a smooth absorption of impact energy depending on the position of the bumper that hits the pedestrian. For instance, when the pedestrian is hit by a part of the bumper adjacent to an end portion of the impact absorption plate, because the slanted portion of the bumper face is not restrained, the bumper face readily deforms immediately upon impact without absorbing any significant amount of energy. Also, because the end portion of the impact absorption plate is more readily deformable than the central portion thereof, the amount of energy that is absorbed by the impact absorption plate until the completion of the deformation of the impact absorption plate is so small that an unacceptably large impact may act upon the pedestrian when the rear surface of the bumper face hits the bumper beam.

To attempt to eliminate such a problem, the inventors of this invention connected each side end of the impact absorption plate to the bumper beam by using a reinforcing plate so that the mechanical strength of the end portions of the impact absorption plate may be increased. However, this arrangement turned out such that the reinforcing plates demonstrate a high resistance to a frontal impact only for a short period of time and abruptly undergoes a buckling deformation immediately afterwards. In this case, the impact that the pedestrian sustains would peak for a short period of time when the rear face of the bumper face hits the impact absorption plate, and following a period of a low impact level owing to the buckling deformation of the reinforcing plate, demonstrates a very high peak when the rear surface of the bumper face finally hits the bumper beam.

In view of such problems of the prior art, a primary object of the present invention is to provide a front bumper arrangement for a vehicle that can smoothly absorb impact energy at the time of a collision with a pedestrian and thereby control the impact that the pedestrian sustains.

A second object of the present invention is to provide a front bumper arrangement for a vehicle that can optimize the capability of a front bumper to absorb impact energy that may arise from collision with a pedestrian, another vehicle or fixed structure by using a minimum addition of structural members.

A third object of the present invention is to provide a front bumper arrangement for a vehicle that can optimize the capability of a front bumper to absorb such impact energy with a minimum modification of existing structural members.

Viewed from one aspect, the present invention providers a vehicle front bumper arrangement, comprising: a bumper beam mounted on a front part of a vehicle body and extending laterally of the vehicle body; a bumper face mounted on a front part of the bumper beam in a spaced relationship and including a laterally planar central flat portion and a pair of slanted portions extending from either side end of the central flat portion at a certain angle toward the rear; and an impact absorption plate with a prescribed cross section and mounted on a front surface of the bumper beam opposite to a rear surface of the central flat portion of the bumper face; wherein the impact absorption plate is provided with a U-shaped cross section and is attached to the bumper beam at upper and lower flanges, characterised in that each side end of the impact absorption plate is provided with a reinforcing member configured to undergo a controlled deformation when an impact is applied to the bumper face at a point adjacent to the corresponding side end of the impact absorption plate, wherein the reinforcing member includes a substantially vertically extending plate member connected between an upper wall of the impact absorption plate and the bumper beam at each side end of the impact absorption plate and provided with a substantially vertical bending line.

According to this arrangement, when a pedestrian or the like is hit by a part of the front bumper adjacent to an end of the impact absorption plate (which would otherwise provide little capability to absorb impact as opposed to the central part of the impact absorption plate), the deformation of the impact absorption plate is controlled by the reinforcing member so that the impact energy can be smoothly absorbed.

The vertically extending plate member increases the resistance to the deformation of the impact absorption plate, and the vertical bending line ensures a controlled deformation of the reinforcing member.

Additionally, the reinforcing plate may include a substantially horizontally extending plate attached to a wall portion of the impact absorption plate at each side end thereof and provided with a substantially lateral bending line. The horizontally extending plate member similarly increases the resistance to the deformation of the impact absorption plate, and the horizontal bending line ensures a controlled deformation of the reinforcing member.

For an improved control of the deformation of the impact absorption plate, the impact absorption plate may be provided with a cutout at each side end thereof, and the substantially horizontally extending plate having a larger wall thickness than the impact absorption plate may be attached to the wall portion of the impact absorption plate so as to cover the cutout.

The bumper beam is preferably provided with a projection projecting forward on each lateral side of the impact absorption plate, and a rear side of each slanted portion of the bumper face is provided with an engagement portion that opposes the corresponding projection in a spaced relationship so that the bumper face and bumper beam may be engaged with each other when the bumper face has deformed rearward.

According to this arrangement, when a pedestrian is hit by a part of a slanted portion of a bumper face adjacent to a central flat portion, as soon as the bumper face deforms rearwards by a prescribed stroke, the engagement portion engages the projection of the bumper beam. As a result, the slanted portion of the bumper face is prevented from deforming rearwardly and the central flat portion is allowed to be pushed against the impact absorption plate so that the resulting deformation of the impact absorption effectively absorbs the impact energy.

To ensure a high mechanical strength and rigidity of the projection, each projection may align with a bumper stay. Each projection may be conveniently provided with a central hole for receiving a fitting such as an eyebolt for a towing purpose. To enable access to such a fitting, each engagement portion may comprise an opening formed in the bumper face that may be closed by a detachable cap or the like.

A preferred embodiment of the present invention will now be described by way of example only with reference to the appended drawings, in which:
Figure 1 is a perspective view of an automobile embodying the present invention;
Figure 2 is an enlarged longitudinal sectional view of a part indicated by II in Figure 1;
Figure 3 is an exploded perspective view of the front bumper;
Figure 4 is a fragmentary perspective view of the bumper beam assembly as seen from above:
Figure 5 is a fragmentary perspective view of the bumper beam assembly as seen from below;
Figure 6 is a view illustrating the mode of operation of the illustrated embodiment;
Figure 7 is a view illustrating the mode of operation of the illustrated embodiment;
Figure 8 is a view illustrating the mode of operation of the illustrated embodiment;
Figure 9 is a graph showing the relationship between the deformation stroke of the front bumper with the impact load according to the illustrated embodiment; and
Figure 10 is a view showing the mode of operation of the illustrated embodiment.

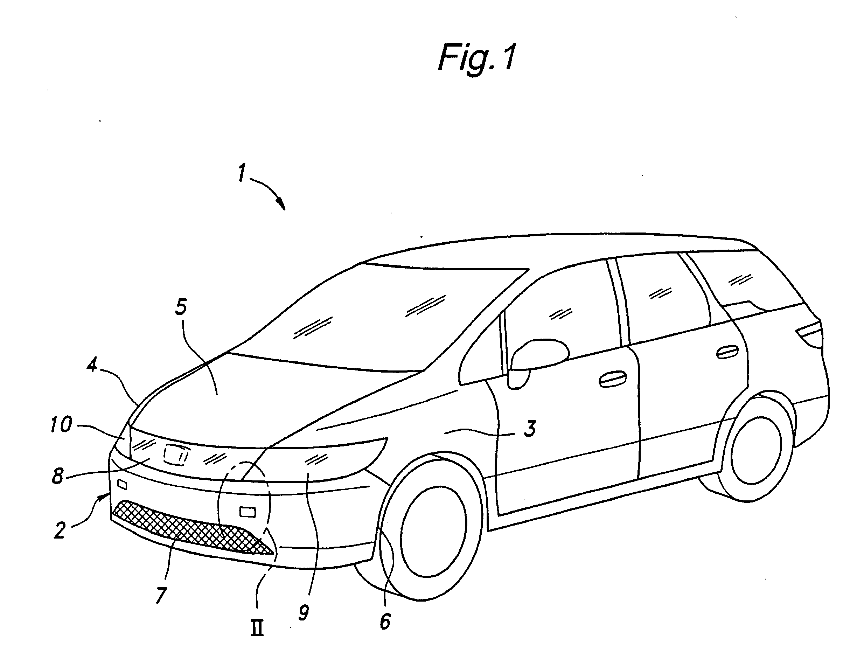

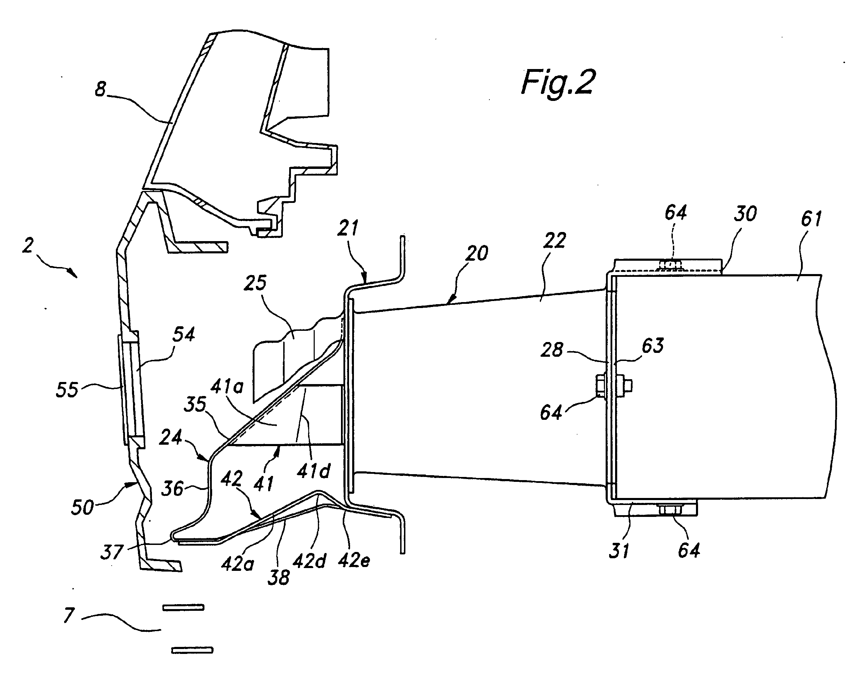

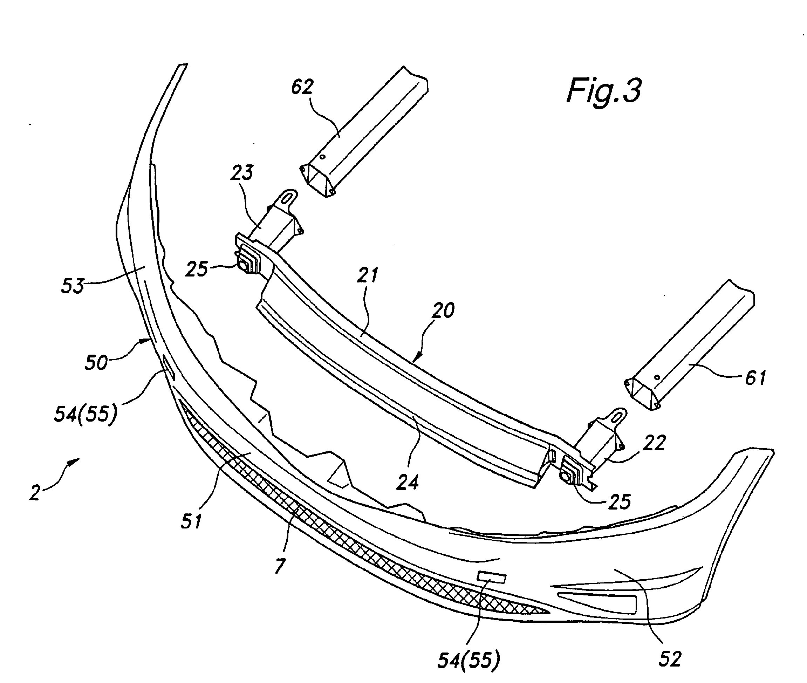

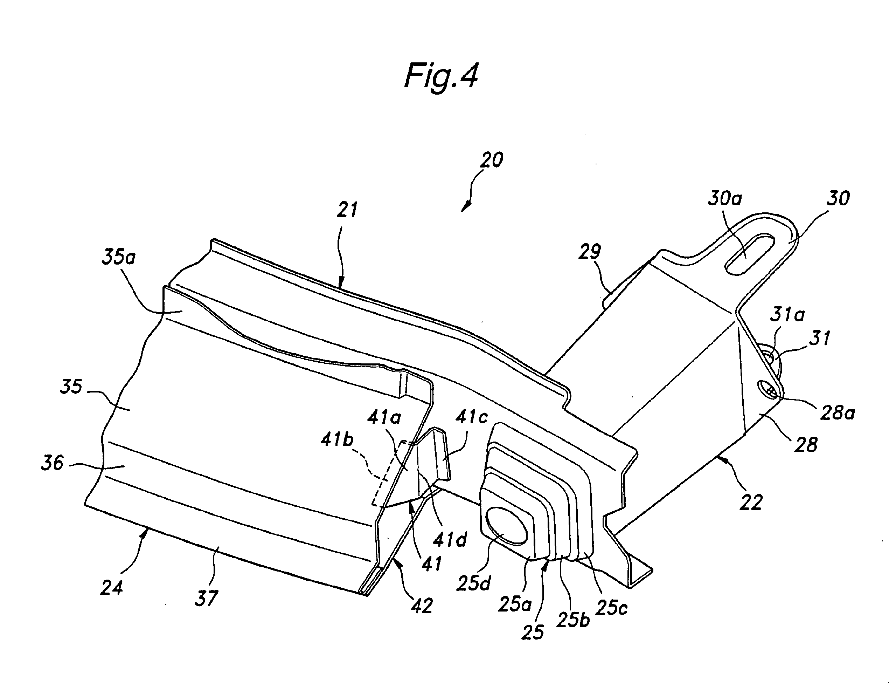

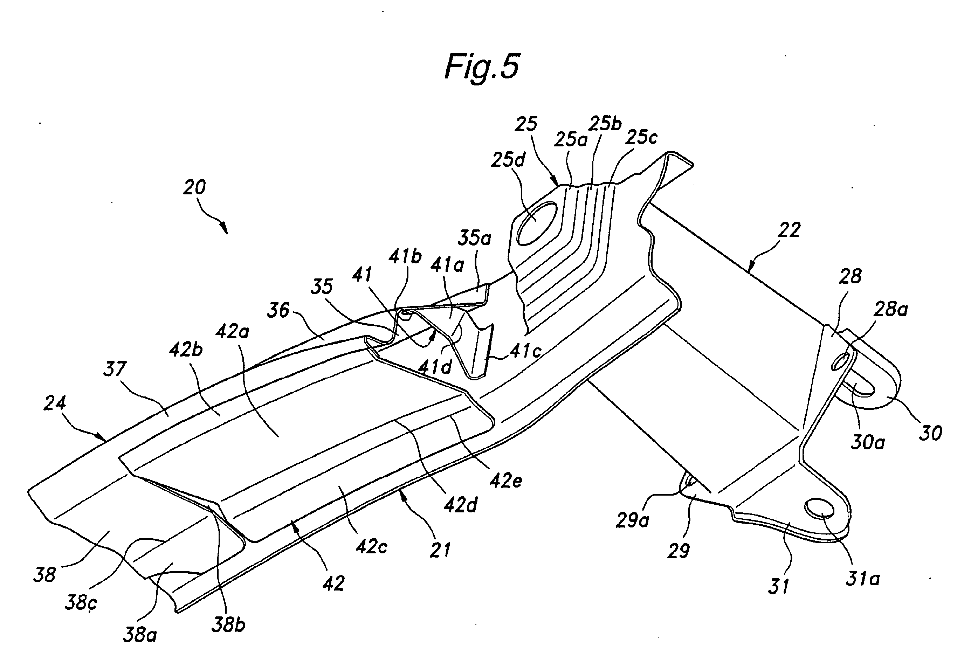

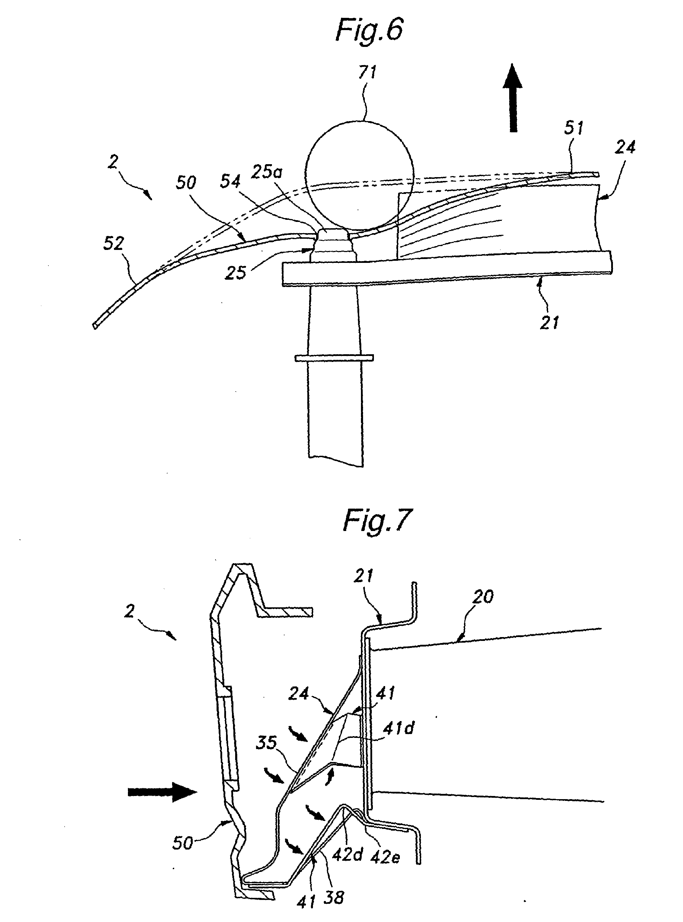

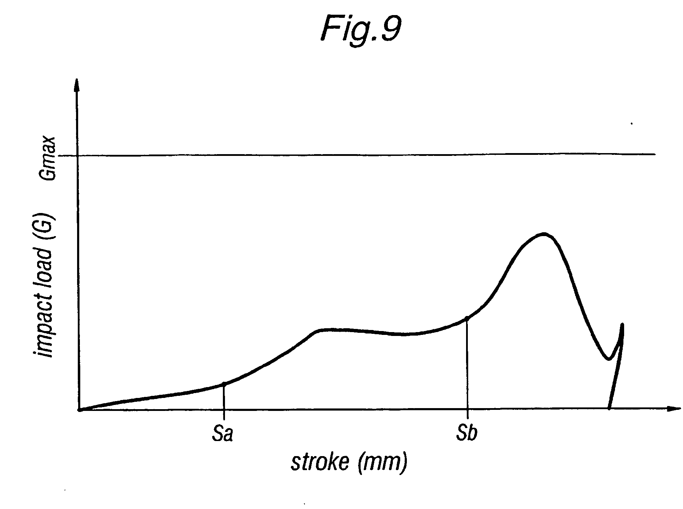

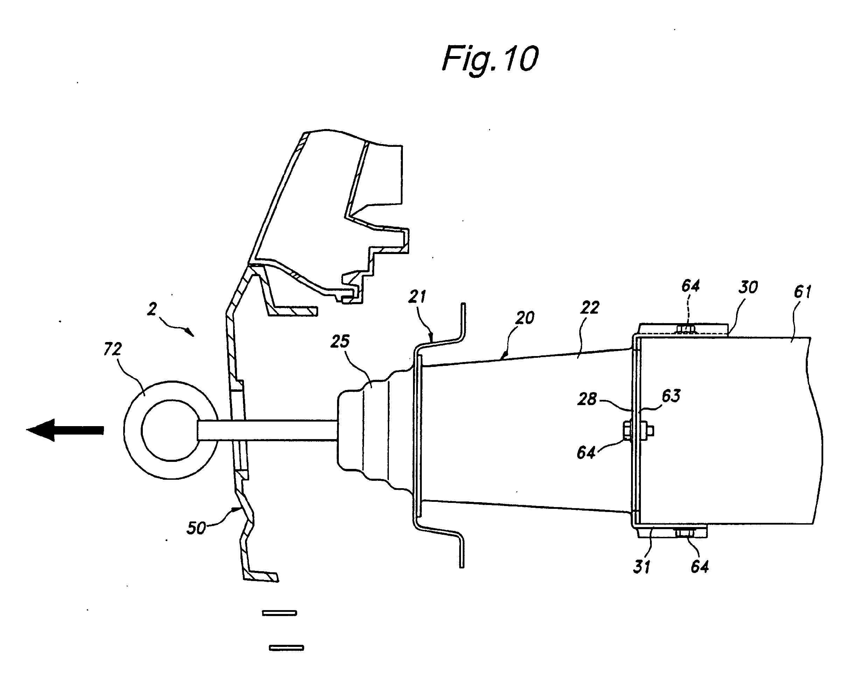

Figure 1 is a perspective view of an automobile embodying the present invention, Figure 2 is an enlarged longitudinal sectional view of a part indicated by II in Figure 1, Figure 3 is an exploded perspective view of the front bumper, Figure 4 is a fragmentary perspective view of the bumper beam assembly as seen from above, and Figure 5 is a fragmentary perspective view of the bumper beam assembly as seen from below. Figures 6 to 8 are views for illustrating the mode of operation of the illustrated embodiment, Figure 9 is a graph showing the relationship between the deformation stroke of the front bumper with the impact load according to the illustrated embodiment, and Figure 10 is a view for showing the mode of operation of the illustrated embodiment.

### <Structure of the Embodiment>

### <Overall Structure>

As shown in Figure 1, in the illustrated embodiment, the present invention is applied to a four door sedan (which is referred to as a vehicle hereinafter). The vehicle body 1 of the illustrated embodiment consists of a monocoque body formed by welding together steel plate panels, and the front part thereof is covered by a front bumper 2, right and left fender panels 3 and 4, a bonnet 5 and so on. The two side ends of the front bumper 2 define parts of corresponding wheel arches 6, and a grill 7 is provided centrally in a lower part of the front bumper 2 to guide air into the engine room when the vehicle is traveling. Between the upper end of the front bumper 2 and the bonnet 5 is provided a front garnish 8. Right and left headlamp units 9 and 10 are arranged between the upper end of the front bumper 1 and the fender panels 3 and 4, respectively.

### <Front Bumper>

As shown in Figures 2 and 3, the front bumper 2 essentially consists of a bumper beam assembly 20 and a bumper face 50, and is fixedly attached to the front ends of structural members of the vehicle body or right and left front side frames 61 and 62.

### <Bumper Beam Assembly>

The bumper beam assembly 20 is made by welding together different pieces of steel plate, and essentially consists of a bumper beam 21 extending laterally of the vehicle body, right and left bumper stays 22 and 23 attached to the right and left ends of the rear surface of the bumper beam 21, respectively, and an impact absorption plate 24 attached to the front surface of the bumper beam 21.

The bumper beam 21 is made of stamp formed relatively thick steel plate, and has a rectangular C-shaped cross section with an open side thereof facing rearward. From either side end of the front surface of the bumper beam 21 extend forward a pair of gussets (projections) 25 that continue from the corresponding bumper stays 22 and 23. As shown in Figures 4 and 5, each gusset 25 is provided with a generally frusto-conical or frusto-pyramidal shape, and is centrally provided with a through hole 25d for passing an eyebolt 72 (see Figure 10) which is described hereinafter. In the illustrated embodiment, each gusset 25 is provided with three shoulders 25a, 25b and 25c for the purpose of favorably absorbing impact energy at the time of a crash with another vehicle.

As shown in Figures 4 and 5, each bumper stay 22 (23) is made of stamp formed relatively thick steel plate, and has a substantially rectangular cross section. The bumper stay 22 (23) is internally provided with a female thread portion for threadably receiving the eyebolt 72. In the illustrated embodiment, a pair of lateral flanges 28 and 29 extend laterally from either side of a rear portion of each bumper stay 22 (23), and upper and lower longitudinal rear flanges 30 and 31 extend rearward from upper and lower ends thereof, respectively. Each lateral flange 28 (29) is formed with a circular bolt receiving hole 28a (29a) so that the lateral flange may be fixedly secured to a connecting flange 63 extending laterally from the front end of the corresponding front side frame 61 (62) by using a threaded bolt 64 passed through the lateral flange 28 (29). The upper longitudinal rear flange 30 is formed with a slot 30a, and is secured to the upper surface of the corresponding front side frame 61 (62) by using a threaded bolt 64 passed through the slot 30a. The lower longitudinal rear flange 31 is formed with a circular hole 31a, and is secured to the lower surface of the corresponding front side frame 61 (62) by using a threaded bolt 64 passed through the hole 31a.

### <Impact Absorption Plate>

The impact absorption plate 24 is made of stamp formed relatively thin steel plate, and is provided with an upper wall 35, front wall 36, front projection 37 and lower wall 38. The upper wall 35 slants downward at a certain angle toward the front part thereof, and a flange 35a formed in the base end of the upper wall 35 is welded to the front surface of the bumper beam 21. The front wall 36 extends vertically downwards from the front edge of the upper wall 35. The front projection 37 is provided with a U-shaped cross section with an open side facing rearward, and projects forward from the lower end of the front wall 36. The lower wall 38 extends rearward from the lower rear edge of the front projection 37, and slants downward toward the front part thereof at a substantially same angle as the upper wall 35. A flange 38a formed in the base end of the lower wall 38 is welded to the lower surface of the bumper beam 21. The lower wall 38 is provided with a rectangular cutout 38b on each side end thereof, and is bent along a laterally extending bending line 38c.

### <First Reinforcing Plate>

The impact absorption plate 24 is connected at each side end thereof to the bumper beam 21 with a first reinforcing plate 41. The first reinforcing plate 41 is made of stamp formed relatively thin steel plate, and is provided with a main wall 41a elongated in the fore-and-aft direction, a flange 41b extending from the front end of the main wall 41 and welded to the upper wall 35 of the impact absorption plate 24, and a flange 41c extending from the rear end of the main wall 41a and welded to the front surface of the bumper beam 21. The main wall 41a of the first reinforcing plate 41 is bent along a bending line 41d extending vertically.

### <Second Reinforcing Plate>

The impact absorption plate 24 is connected at each side end to the bumper beam 21 via a second reinforcing plate 42 mounted on the lower wall 38 of the bumper beam 21 so as to cover the cutout 38b of the lower wall 38. The second reinforcing plate 42 is made of stamp formed relatively thick steel plate, and is provided with a laterally elongated main wall 42a covering the cutout 38b, a flange 42b extending from the front end of the main wall 42a and welded to the lower surface of the front projection 37 of the impact absorption plate 24 and a flange 42c extending from the rear end of the main wall 42a and welded to the lower surface of the bumper beam 21. The main wall 42a of the second reinforcing plate 42 is bent along two bending lines 42d and 42e both extending in the lateral direction.

### <Bumper Face>

The bumper face 50 is made of injection molded plastic material, and comprises a laterally planar central flat portion 51 and a pair of slanted portions 52 and 53 extending from either side end of the central flat portion 51 at a certain angle toward the rear. Each of the slanted portions 52 and 53 is provided with an eyebolt receiving hole (engagement portion) 54 at a position opposite to the corresponding gusset 25 and adjacent to the central flat portion 51. The eyebolt receiving hole 54 is dimensioned and configured so as to receive the forward shoulder 25a of the corresponding gusset 25, and is normally closed by a lid 55 made of plastic material during normal operation of the vehicle.

### <Mode of Operation of the Embodiment>

A vehicle could hit a pedestrian who inadvertently comes into the path of the vehicle as well as another vehicle or a fixed structure on the road. The pedestrian could be hit by any part of the vehicle body 1, but most likely is hit by the front surface of the front bumper 2. If a leg of the pedestrian is hit by the central part (or the central flat portion 51 of the bumper face 50), the impact inflicted upon the pedestrian is mitigated by the deformation of the impact absorption plate 24. If the leg of the pedestrian hits either side portion (one of the right and left slanted portions 52 and 53 of the bumper face 50) of the front bumper 2, the pedestrian slides along the slanted surface of the bumper face side portion and is pushed aside, for instance toward the sidewalk, without receiving any large impact.

On the other hand, if the leg 71 of the pedestrian is hit by a part of the front bumper 2 intermediate between the central portion and left (or right) side portion of the front bumper (or a part of the central flat portion 51 of the bumper face 50 adjacent to the left end thereof), the relatively soft bumper face 50 deforms rearward as a result of collision with the leg 71 and the rear surface of the bumper face 50 subsequently engages the impact absorption plate 24. At such a time, because the eyebolt receiving hole 54 of the bumper face 50 opposes the gusset 25 of the bumper beam 21, the receding movement of the bumper face 50 by a prescribed distance causes the forward shoulder 25a of the gusset 25 to be received by the eyebolt receiving hole 54. As a result, the left (right) end of the central flat portion 51 of the bumper face 50 is engaged by the gusset 25 (and hence by the bumper beam 21) and the impact load can be effectively transmitted to the impact absorption plate 24.

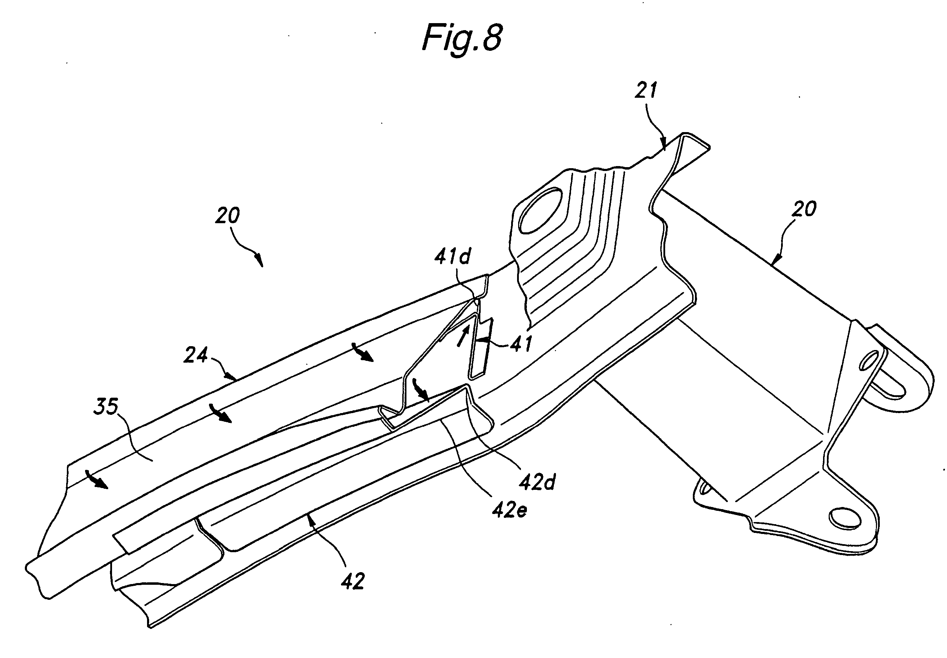

In the illustrated embodiment, when the impact load is transmitted to the left end of the impact absorption plate 24, because both the upper wall 35 and lower wall 38 tilt downward toward their front parts as mentioned earlier, the impact absorption plate 24 deforms in counter-clockwise direction as shown in Figures 7 and 8. Because the first reinforcing plate 41 is welded to both the upper wall 35 of the impact absorption plate 24 and the front surface of the bumper beam 21, the impact absorption plate 24 significantly bends along the bending line 41d as it deforms so that an absorption of relatively large impact energy takes place. Because the first reinforcing plate 41 is provided with the bending line 41d, it can deform without providing any high resistance against a frontal impact.

Meanwhile, because the second reinforcing plate 42 is welded to both the lower surface of the front projection 37 of the impact absorption plate 24 and the lower surface of the bumper beam 21, the impact absorption plate 24 significantly bends along the two bending lines 42d and 42e as it deforms, and absorbs large energy during this process.
Because the second reinforcing plate 42 is made of a thicker steel plate than the first reinforcing plate 41, while it absorbs larger impact energy, it can deform without providing any high resistance against a frontal impact owing to the two bending lines.

As can be appreciated from the foregoing description of the illustrated embodiment, at the time of a vehicle crash, because the corresponding side end of the central flat portion 51 of the bumper face 50 is engaged by the bumper beam 21, and the first reinforcing plate 41 and second reinforcing plate 42 are used for absorbing the impact energy, the impact applied to the pedestrian when the rear surface of the bumper face 50 hits the bumper beam can be mitigated.

As shown in Figure 9, only the bumper face 50 deforms in an initial phase of the crash, but the impact load can be kept at a relatively high level because the side end of the central planar portion 51 is engaged by the bumper beam 21. From the time the rear surface of the bumper face 50 engages the impact absorption plate 24 (Sa), the impact load linearly increases to a certain level, and this level is maintained until the bumper face 50 comes into engagement with the bumper beam 21 (Sb) and the impact load temporarily increases before the absorption of the impact completes. As can be appreciated from this description, the peaking of the impact load during the deformation of the impact absorption plate 24 can be avoided as opposed to the conventional arrangement, and the peak of the impact load following the engagement of the bumper face 50 with the bumper beam 21 can also be controlled below a tolerable limit (Gmax).

When towing the vehicle due to a failure of the vehicle, as shown in Figure 10, an eyebolt 72 is passed into the eyebolt receiving hole 54 of the bumper face 50 and threaded into the female thread portion formed inside the bumper stay 22, and a rope connected to a rear end of another vehicle is tied to the eyebolt 72. As a result, a large tensile load is applied to the bumper stay 22 when towing the vehicle, and a significant stress is produced in the part connecting the bumper stay 22 with the front side frame 61. Therefore, conventionally, the bumper stay 22 was required to be made of a relatively thick steel plate because flanges were formed on the opposing end surfaces and joined to each other by using a threaded bolt.

However, according to the illustrated embodiment, because the upper rear longitudinal flange 30 and lower rear longitudinal flange 31 of the bumper stay 22 are made to extend rearward and to be secured to the upper and lower surfaces of the front side frames 61, respectively, the tensile load is applied to the rear longitudinal flanges 30 and 31 as shear stresses so that the bumper stay 22 may be made of relatively thin steel plate. Also, the fastening surfaces include both vertical surfaces (the right and left lateral flanges 28 and 29) and horizontal surfaces (the upper and lower rear longitudinal flanges 30 and 31) so that the assembling precision can be improved.

Although the present invention was described in terms of a specific embodiment, the present invention is not limited to the illustrated embodiment but may be modified in a wide ranging manner. For instance, the present invention was applied to a four door sedan in the illustrated embodiment, but may also be applied to two door motor vehicles and two seat motor vehicles. Also, the specific structure of the bumper beam assembly and the shapes of the projections, engagement portions, and first and second reinforcing beams can be modified without departing from the scope of the present invention which is set forth in the appended claims.

The contents of the original Japanese patent application on which the Paris Convention priority claim is made for the present application are incorporated in this application by reference.

## Claims

1. A vehicle front bumper arrangement, comprising:
a bumper beam (21) mounted on a front part of a vehicle body and extending laterally of the vehicle body;
a bumper face (50) mounted on a front part of the bumper beam in a spaced relationship and including a laterally planar central flat portion (51) and a pair of slanted portions (52, 53) extending from either side end of the central flat portion at a certain angle toward the rear; and
an impact absorption plate (24) with a prescribed cross section and mounted on a front surface of the bumper beam opposite to a rear surface of the central flat portion of the bumper face;
wherein the impact absorption plate is provided with a U-shaped cross section and is attached to the bumper beam at upper and lower flanges (35a, 38a),
**characterised in that** each side end of the impact absorption plate is provided with a reinforcing member (41,42) configured to undergo a controlled deformation when an impact is applied to the bumper face at a point adjacent to the corresponding side end of the impact absorption plate,
wherein the reinforcing member includes a substantially vertically extending plate member (41) connected between an upper wall of the impact absorption plate and the bumper beam at each side end of the impact absorption plate and provided with a substantially vertical bending line (41d).

2. The vehicle front bumper arrangement according to claim 1 wherein the reinforcing member includes a substantially horizontally extending plate member (42) attached to a wall portion of the impact absorption plate at each side end thereof.

3. The vehicle front bumper arrangement according to claim 2, wherein the impact absorption plate is provided with a cutout (38b) at each side end thereof, and the substantially horizontally extending plate member (42) is attached to the wall portion of the impact absorption plate so as to cover the cutout.

4. The vehicle front bumper arrangement according to claim 2 or 3, wherein the horizontally extending plate member (42) is provided with a larger wall thickness than the impact absorption plate.

5. The vehicle front bumper arrangement according to claim 2, 3 or 4, wherein the horizontally extending plate member is provided with at least one laterally extending bending line (42d, 42e).

6. The vehicle front bumper arrangement according to any preceding claim, wherein the bumper beam is provided with a projection (25) projecting forward on each lateral side of the impact absorption plate, and a rear side of each slanted portion (52) of the bumper face is provided with an engagement portion (54, 55) that opposes the corresponding projection in a spaced relationship so that the bumper face and bumper beam may be engaged with each other when the bumper face has deformed rearward.

7. The vehicle front bumper arrangement according to claim 6, wherein each projection aligns with a bumper stay (22, 23).

8. The vehicle front bumper arrangement according to claim 6 or 7, wherein each projection is provided with a central hole for receiving a fitting (72) for a towing purpose.

9. The vehicle front bumper arrangement according to claim 6, 7 or 8, wherein each engagement portion comprises an opening formed in the bumper face.

## Patentansprüche

1. Fahrzeug-Frontstoßfänger-Anordnung umfassend:
einen Stoßfängerträger (21), der an einem vorderen Teil eines Fahrzeugkörpers angebracht ist und sich seitlich des Fahrzeugkörpers erstreckt;
eine Stoßfängerverkleidung (50), die an einem vorderen Teil des Stoßfängerträgers in Abstandsbeziehung angebracht ist und einen seitlich ebenen zentralen flachen Abschnitt (51) sowie ein Paar schräger Abschnitte (52, 53) enthält, die sich von jedem Seitenende des zentralen flachen Abschnitts in einem bestimmten Winkel zur Rückseite hin erstrecken; und
eine Aufprallabsorptionsplatte (24) mit vorgeschriebenem Querschnitt und die an einer Vorderseite des Stoßfängerträgers gegenüber einer Rückseite des zentralen flachen Abschnitts der Stoßfängerverkleidung angebracht ist;
wobei die Aufprallabsorptionsplatte mit einem U-förmigen Querschnitt versehen ist und an oberen und unteren Flanschen (35a, 38a) an dem Stoßfängerträger angebracht ist,
**dadurch gekennzeichnet, dass** jedes Seitenende der Aufprallabsorptionsplatte mit einem Verstärkungselement (41, 42) versehen ist, das konfiguriert ist, um einer gesteuerten Deformation zu unterliegen, wenn an einem dem entsprechenden Seitenende der Aufprallabsorptionsplatte benachbarten Punkt ein Aufprall auf die Stoßfängerverkleidung einwirkt,
wobei das Verstärkungselement ein sich im wesentlich vertikal erstreckendes Plattenelement (41) enthält, das zwischen einer oberen Wand der Aufprallabsorptionsplatte und dem Stoßfängerträger an jedem Seitenende der Aufprallabsorptionsplatte angeschlossen ist und mit einer im wesentlichen vertikalen Biegelinie (41d) versehen ist.

2. Fahrzeug-Frontstoßfänger-Anordnung nach Anspruch 1, worin das Verstärkungselement ein sich im wesentlich horizontal erstreckendes Plattenelement (42) enthält, das an einem Wandabschnitt der Aufprallabsorptionsplatte an jedem Seitenende davon angebracht ist.

3. Fahrzeug-Frontstoßfänger-Anordnung nach Anspruch 2, worin die Aufprallabsorptionsplatte an jedem Seitenende davon mit einem Ausschnitt (38b) versehen ist und das sich im wesentlichen horizontal erstreckende Plattenelement (42) an dem Wandabschnitt der Aufprallabsorptionsplatte so angebracht ist, dass es den Ausschnitt abdeckt.

4. Fahrzeug-Frontstoßfänger-Anordnung nach Anspruch 2 oder 3, worin das sich horizontal erstreckende Plattenelement (42) mit einer größeren Wanddicke versehen ist als die Aufprallabsorptionaplatte.

5. Fahrzeug-Frontstoßfänger-Anordnung nach Anspruch 2, 3 oder 4, worin das sich horizontal erstreckende Plattenelement mit zumindest einer sich seitlich erstreckenden Biegelinie (42d, 42e) versehen ist.

6. Fahrzeug-Frontstoßfänger-Anordnung nach einem vorhergehenden Anspruch, worin der Stoßfängerträger mit einem Vorsprung (25) versehen ist, der an jeder Querseite der Aufprallabsorptionsplatte nach vorne vorsteht, und eine Rückseite jedes schrägen Abschnitts (52) der Stoßfängerverkleidung mit einem Eingriffsabschnitt (54, 55) versehen ist, der dem entsprechenden Vorsprung in Abstandsbeziehung gegenüberliegt, sodass die Stoßfängerverkleidung und der Stoßfängerträger miteinander in Eingriff treten können, wenn sich die Stoßfängerverkleidung nach hinten verformt hat.

7. Fahrzeug-Frontstoßfänger-Anordnung nach Anspruch 6, worin jeder Vorsprung mit einer Stoßfängerstrebe (22, 23) fluchtet.

8. Fahrzeug-Frontstoßfänger-Anordnung nach Anspruch 6 oder 7, worin jeder Vorsprung mit einem zentralen Loch zur Aufnahme eines zum Abschleppen dienenden Beschlags (72) versehen ist.

9. Fahrzeug-Frontstoßfänger-Anordnung nach Anspruch 6, 7 oder 8, worin jeder Eingriffabschnitt eine in der Stoßfängerverkleidung ausgebildete Öffnung aufweist.

## Revendications

1. Agencement formant pare-chocs avant d'un véhicule, comprenant :
une poutre de pare-chocs (21) montée sur une partie avant d'une carrosserie de véhicule et s'étendant latéralement par rapport à la carrosserie du véhicule ;
une face de pare-chocs (50) montée sur une partie avant de la poutre de pare-chocs, en étant espacée de cette dernière, et comprenant une partie plate centrale (51), plane dans la direction latérale, et une paire de parties inclinées (52, 53) s'étendant depuis chaque extrémité latérale de la partie plate centrale, suivant un certain angle vers l'arrière ; et
une plaque d'absorption des chocs (24) ayant une section droite prédeterminée et montée sur une surface avant de la poutre de pare-chocs, arrière de la partie plate centrale de la face de pare-chocs ;
dans lequel la plaque d'absorption des chocs est pourvue d'une section transversale en forme de U et est attachée à la poutre de pare-chocs au niveau de rebords supérieur et inférieur (35a, 38a),
**caractérisé en ce que** chaque extrémité latérale de la plaque d'absorption des chocs est pourvue d'un élément de renfort (41, 42) configuré de façon à subir une déformation maîtrisée lors d'un choc sur la face de pare-chocs, au niveau d'un point adjacent à l'extrémité latérale correspondante de la plaque d'absorption des chocs;
dans lequel l'élément de renfort comprend un élément de plaque (41) s'étendant essentiellement verticalement, raccordé entre une paroi supérieure de la plaque d'absorption des chocs et la poutre de pare-chocs, au niveau de chaque extrémité latérale de la plaque d'absorption des chocs, et pourvu d'une ligne de pliage (41d) essentiellement verticale.

2. Agencement formant pare-chocs avant d'un véhicule selon la revendication 1, dans lequel l'élément de renforcement comprend un élément de plaque (42) s'étendant essentiellement horizontalement, attaché à une partie de paroi de la plaque d'absorption des chocs, au niveau de chacune de ses extrémités latérales.

3. Agencement formant pare-chocs avant d'un véhicule selon la revendication 2, dans lequel la plaque d'absorption des chocs est pourvue d'une découpe (38b) au niveau de chacune de ses extrémités latérales, et l'élément de plaque (42) s'étendant essentiellement horizontalement est attaché à la partie de paroi de la plaque d'absorption des chocs de façon à recouvrir la découpe.

4. Agencement formant pare-chocs avant d'un véhicule selon la revendication 2 ou 3, dans lequel l'élément de plaque (42) s'étendant horizontalement est pourvu d'une plus grande épaisseur de paroi que la plaque d'absorption des chocs.

5. Agencement formant pare-chocs avant d'un véhicule selon la revendication 2, 3 ou 4, dans lequel l'élément de plaque s'étendant horizontalement est pourvu d'au moins une ligne de pliage (42d, 42e) s'étendant latéralement.

6. Agencement formant pare-chocs avant d'un véhicule selon l'une quelconque des revendications précédentes, dans lequel la poutre de pare-chocs, est pourvue d'une saillie (25) ressortant vers l'avant de chaque face latérale de la plaque d'absorption des chocs, et une face arrière de chaque partie inclinée (52) de la face de pare-chocs est pourvue d'une partie d'encastrement (54, 55) qui fait face à la saillie correspondante, en étant espacée de cette dernière, de telle sorte que la face de pare-chocs, et la poutre de pare-chocs puissent s'encastrer l'une dans l'autre lorsque la face de pare-chocs a été déformée vers l'arrière.

7. Agencement formant pare-chocs avant d'un véhicule selon la revendication 6, dans lequel chaque saillie est alignée avec un support de pare-chocs (22, 23).

8. Agencement formant pare-chocs avant d'un véhicule selon la revendication 6 ou 7, dans lequel chaque saillie est pourvue d'un trou central destiné à recevoir un accessoire (72) permettant un remorquage.

9. Agencement formant pare-chocs avant d'un véhicule selon la revendication 6, 7 ou 8, dans lequel chaque partie d'encastrement comprend une ouverture formée dans la face de pare-chocs.
